# EUROPÄISCHE PATENTSCHRIFT

(11) **EP 3 246 189 B1**
(45) Veröffentlichungstag und Bekanntmachung des Hinweises auf die Patenterteilung: **16.03.2022**
(21) Anmeldenummer: 17178781.5
(22) Anmeldetag: 08.08.2012
(51) Int. Cl.: B60K 6/48, B60K 6/547, B60K 6/40

(54) **HYBRID-ANTRIEBSSTRANG**
HYBRID POWER TRAIN
GROUPE MOTOPROPULSEUR HYBRIDE

(30) Priorität: 11.08.2011 DE 102011110444
(43) Veröffentlichungstag der Anmeldung: 22.11.2017
(62) Teilanmeldung aus: 12179610.6
(73) Patentinhaber: Magna PT B.V. & Co. KG, 74199 Untergruppenbach (DE)
(72) Erfinder: Blessing, Uli Christian, 74078 Heilbronn (DE)
(74) Vertreter: Rausch, Gabriele

(56) Entgegenhaltungen:
- EP-A1- 2 468 553
- DE-A1- 19 917 724
- DE-A1- 19 960 621
- DE-A1-102010 063 092
- US-A1- 2002 084 118
- US-A1- 2011 167 956

## Beschreibung

Die vorliegende Erfindung betrifft einen Hybrid-Antriebsstrang für ein Kraftfahrzeug, mit einem Verbrennungsmotor, einer elektrischen Maschine, einer Getriebeanordnung zur Einrichtung von wenigstens zwei unterschiedlichen Gangstufen, wobei der Verbrennungsmotor und die elektrische Maschine mit einem Eingangsglied der Getriebeanordnung gekoppelt sind, und mit einem Differential, das mit einem Ausgang der Getriebeanordnung gekoppelt und dazu eingerichtet ist, Antriebsleistung auf zwei Antriebswellen zu verteilen.

Ein derartiger Antriebsstrang ist beispielsweise bekannt aus dem Dokument WO 2010/063735 A1.

Bei diesem Antriebsstrang ist die elektrische Maschine koaxial zu dem Verbrennungsmotor angeordnet. Die Getriebeanordnung ist durch ein Planetengetriebe gebildet.

Ein ähnlicher Antriebsstrang ist bekannt aus dem Dokument US-A-5,562,565 , bei dem der Verbrennungsmotor über einen hydrodynamischen Wandler und eine Kupplung mit dem Eingangsglied der Getriebeanordnung verbunden ist.

Ferner ist aus dem Dokument DE 20 118 908 U1 ein Hybrid-Antriebsstrang bekannt, bei dem ein Verbrennungsmotor über ein erstes Getriebe mit einem Differential verbunden ist. Eine elektrische Maschine ist über ein zweites Getriebe mit dem Differential verbunden.

Aus dem Dokument US 2002/008 4118 A1 ist ein Hybrid-Antriebstrang bekannt, bei dem die Leistung von elektrischer Maschine und Verbrennungsmotor mit getrennten Stirnradsätzen eingebracht wird.

EP 2 468 553 A1 zeigt eine Antriebsanordnung mit parallelem Energieeintrag über unterschiedliche Zahnradeinbindungen in das Antriebssystem.

Ferner offenbart das gattungsgemäße Dokument DE 10 2010 063 092 A1 einen Hybrid-Antrieb, der eine Stimradgetriebeanordnung mit zwei Getriebeeingangswellen aufweist, von denen eine koaxial mit einer Kurbelwelle des Verbrennungsmotors ausgerichtet ist und an der Losräder der Stirnradgetriebeanordnung gelagert sind, und mit einer zweiten Getriebeeingangswelle, an der Losräder gelagert sind, die zur Einrichtung von Gangstufen im elektrischen Fahrbetrieb ausgelegt sind. Die Getriebeeingangswellen sind über einen Stirnradsatz miteinander verbunden, an dem auch die elektrische Maschine angebunden ist. Ein ähnlicher Antriebstrang ist aus dem Dokument DE 199 60 621 A1 bekannt. Weitere Hybrid-Antriebsstränge sind aus dem Dokument US 2011/016 7956 A1 bekannt.

Die DE19917724A1 zeigt einen einfachen elektrischen Antrieb mit Zweigangschaltung.

Vor dem obigen Hintergrund ist es eine Aufgabe der Erfindung, einen Hybrid-Antriebsstrang anzugeben, der kostengünstig realisiert und/oder kompakt aufgebaut werden kann.

Die obige Aufgabe wird bei dem eingangs genannten Hybrid-Antriebsstrang dadurch gelöst, dass die elektrische Maschine und der Verbrennungsmotor über einen Stirnradsatz mit einer Getriebeeingangswelle der Getriebeanordnung gekoppelt sind.

Bei dem erfindungsgemäßen Hybrid-Antriebsstrang können der Verbrennungsmotor und die elektrische Maschine konstruktiv einfach, nämlich mittels eines vorzugsweise einzelnen Stirnradsatzes mit der Getriebeeingangswelle der Getriebeanordnung gekoppelt werden. Hierdurch können der Verbrennungsmotor und die elektrische Maschine parallel zueinander angeordnet werden (also nicht koaxial). Hierdurch ist es auch möglich, dass die elektrische Maschine und der Verbrennungsmotor in axialer Richtung (die vorliegend vorzugsweise als eine Richtung quer zu einer Fahrzeuglängsachse definiert ist) zumindest teilweise überlappend angeordnet werden.

Ferner können der Verbrennungsmotor und die elektrische Maschine vorzugsweise in axialer Richtung auf der gleichen Seite des Differentials angeordnet sein.

Der erfindungsgemäße Hybrid-Antriebsstrang ist dabei dazu ausgelegt, ein Fahrzeug entweder rein elektromotorisch, rein verbrennungsmotorisch oder kombiniert verbrennungsmotorisch und elektromotorisch anzutreiben.

Die Getriebeanordnung lässt sich vorzugsweise in eine Neutralstellung schalten, so dass der Verbrennungsmotor die elektrische Maschine auch im Stand des Fahrzeugs laden kann.

Gemäß der Erfindung weist der Stirnradsatz ein fest mit der Getriebeeingangswelle verbundenes erstes Zahnrad auf, das mit einem der elektrischen Maschine zugeordneten zweiten Zahnrad und mit einem dem Verbrennungsmotor zugeordneten dritten Zahnrad in Eingriff steht.

Der Stirnradsatz ist mit nur drei Zahnrädern aufgebaut, um den Verbrennungsmotor und die elektrische Maschine mit der Getriebeeingangswelle zu verbinden.

Die elektrische Maschine ist koaxial zu einer der Antriebswellen angeordnet.

Dadurch kann eine in radialer Richtung besonders kompakte Bauweise des Antriebsstranges realisiert werden.

Gemäß einer weiteren bevorzugten Ausführungsform ist eine Kurbelwelle des Verbrennungsmotors über eine Koppeleinrichtung mit dem dritten Zahnrad gekoppelt.

Hierdurch kann der Verbrennungsmotor von dem dritten Zahnrad abgekoppelt werden oder mit diesem verbunden werden. Bei einem rein elektromotorischen Antrieb wird der Verbrennungsmotor über die Koppeleinrichtung vorzugsweise von dem dritten Zahnrad abgekoppelt, damit die elektrische Maschine den Verbrennungsmotor nicht mitschleppen muss.

Gemäß einer besonders bevorzugten Ausführungsform ist die Koppeleinrichtung dabei durch einen Freilauf gebildet.

Bei dieser Ausführungsform ist es möglich, den Verbrennungsmotor während eines rein elektromotorischen Betriebes zuzuschalten, wobei sich die Drehzahl unter Nutzung des Freilaufes der Drehzahl der elektrischen Maschine annähert.

Ferner kann der Verbrennungsmotor die elektrische Maschine mitschleppen. Bei einem rein verbrennungsmotorischen Antrieb kann folglich Antriebsleistung zum Laden der elektrischen Maschine abgezweigt werden, die in diesem Fall als Generator betrieben wird. Der erfindungsgemäße Antriebsstrang eignet sich insbesondere als Range-Extender-Antriebsstrang, bei dem das Fahrzeug beispielsweise im Stadtverkehr überwiegend elektromotorisch betrieben werden kann, wohingegen bei längeren Überlandfahrten ein rein verbrennungsmotorischer Fahrbetrieb möglich ist, bei dem zusätzlich ein elektrischer Energiespeicher für die elektrische Maschine aufgeladen wird, und zwar durch den oben beschriebenen Generatorbetrieb.

Ferner ist der Freilauf vorzugsweise schaltbar ausgebildet. Dies bedeutet vorzugsweise, dass mittels eines Aktuators eine Umschaltung des Freilaufes möglich ist, beispielsweise von einem Freilaufbetrieb in einen starr gekoppelten Betrieb.

Ferner ist es bevorzugt, wenn eine Motorwelle der elektrischen Maschine fest mit dem zweiten Zahnrad verbunden ist.

Bei dieser Ausführungsform wird der Rotor der elektrischen Maschine während eines verbrennungsmotorischen Antriebes immer mitgeschleppt. Wenn der elektrische Energiespeicher vollständig aufgeladen ist, kann die elektrische Maschine dabei in einen elektrischen Leerlauf geschaltet werden, so dass der Rotor im Wesentlichen verlustfrei mitdrehen kann.

Gemäß einer weiteren insgesamt bevorzugten Ausführungsform sind an der Getriebeeingangswelle ein erstes und ein zweites Losrad drehbar gelagert, die über jeweilige Kupplungen schaltbar sind.

Bei dieser Ausführungsform ist das erste Losrad einer ersten Gangstufe und das zweite Losrad einer zweiten Gangstufe zugeordnet.

Die beiden Kupplungen sind vorzugsweise jeweils in eine Neutralstellung schaltbar, so dass die Getriebeanordnung insgesamt in eine Neutralstellung schaltbar ist. Die beiden Kupplungen können als herkömmliche Schaltkupplungen in Form von Klauenkupplungen oder in Form von Synchron-Schaltkupplungen ausgebildet sein.

Von besonderem Vorteil ist es jedoch, wenn die Kupplungen als Lastschaltkupplungen ausgebildet sind.

Bei dieser Ausführungsform können die Kupplungen beispielsweise als nasslaufende Lamellenkupplungen ausgebildet sein. Hierbei ist es möglich, Gangwechsel auf eine überschneidende Art und Weise durchzuführen, derart, dass Gangwechsel im Wesentlichen ohne Zugkraftunterbrechung durchgeführt werden können.

Als Lastschaltkupplungen sind jedoch auch trockene Reibkupplungen denkbar.

Ferner ist es insgesamt vorteilhaft, wenn ein Eingangsglied des Differentials mit einem ersten und einem zweiten Triebrad fest verbunden ist, die mit dem ersten bzw. dem zweiten Losrad in Eingriff stehen.

Bei dieser Ausführungsform können die zwei Gangstufen auf radial kompakte Art und Weise dadurch realisiert werden, dass jeder Gangstufe ein Radsatz aus einem Losrad und einem Festrad zugeordnet ist, wobei die Festräder durch die jeweiligen Triebräder gebildet sind, die mit dem Eingangsglied des Differentials fest verbunden sind (nach der Art von Zahnkränzen).

Die elektrische Maschine kann bei dem erfindungsgemäßen Antriebsstrang über mindestens zwei, vorzugsweise genau zwei schaltbare Gangstufen, insbesondere in Form von zwei schaltbaren "Final-Drives" gefahren werden. Wenn die Getriebeanordnung in die Neutralstellung geschaltet wird, kann die elektrische Maschine mittels des Verbrennungsmotors im Stand geladen werden. Ferner ist ein Laden eines elektrischen Energiespeichers während eines verbrennungsmotorischen Fahrbetriebes ebenfalls möglich, um eine Reichweitenverlängerung ("Range Extension") zu ermöglichen. Ferner kann der Verbrennungsmotor auch separat über einen schaltbaren Freilauf zugeschaltet oder abgeschaltet werden. Es besteht damit die Möglichkeit einer Synchronisierung von Drehzahl des Verbrennungsmotors und von Drehzahl der Getriebeeingangswelle mittels der elektrischen Maschine, ohne den Verbrennungsmotor beim elektrischen Fahrbetrieb des Fahrzeuges ständig mitschleppen zu müssen. Ferner kann der Verbrennungsmotor über die elektrische Maschine angelassen (gestartet) werden, wobei der Verbrennungsmotor mit mindestens bis zu einer Leerlaufdrehzahl hochgeschleppt wird. Dabei wird die Getriebeanordnung in die Neutralstellung geschaltet, während das Fahrzeug steht oder rollt ("segelt").

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigt:

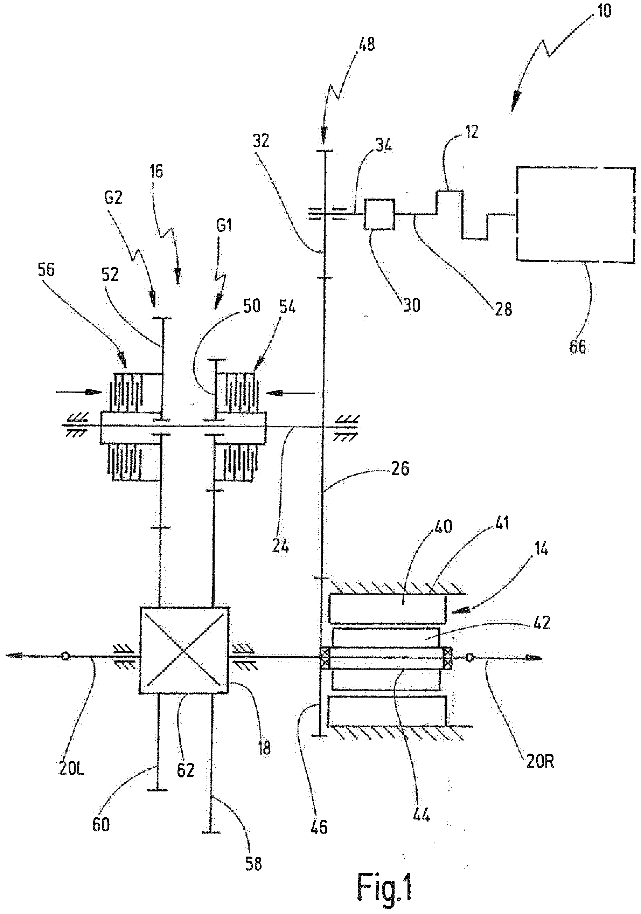

Fig. 1 eine schematische Längsschnittansicht durch eine Ausführungsform eines erfindungsgemäßen Antriebsstranges.

Eine Ausführungsform eines Hybrid-Antriebsstranges ist in Fig. 1 schematisch im Längsschnitt dargestellt und mit 10 bezeichnet.

Der Antriebsstrang 10 weist einen Verbrennungsmotor 12, eine elektrische Maschine 14, eine Getriebeanordnung 16 und ein Differential 18 auf. Der Verbrennungsmotor 12 und die elektrische Maschine 14 sind mit einem Eingangsglied der Getriebeanordnung 16 verbunden. Ein Ausgang der Getriebeanordnung 16 ist mit dem Differential 18 verbunden. Elektrische oder verbrennungsmotorische Antriebsleistung wird folglich über das Eingangsglied der Getriebeanordnung, die Getriebeanordnung 16 und das Differential 18 auf Antriebswellen 20L, 20R übertragen, die vorzugsweise mit angetriebenen Rädern einer Achse des Kraftfahrzeuges verbunden sind. In einer alternativen Ausführungsform können die Antriebswellen 20L, 20R auch mit unterschiedlichen Achsen des Kraftfahrzeuges verbunden sein.

Der Hybrid-Antriebsstrang ist dazu ausgelegt, das Fahrzeug entweder rein elektromotorisch, rein verbrennungsmotorisch oder kombiniert elektromotorisch und verbrennungsmotorisch anzutreiben.

Die Getriebeanordnung 16 weist eine Getriebeeingangswelle 24 auf, die mit einem Eingangszahnrad 26 in Form eines Stirnrades drehfest verbunden ist. Eine Kurbelwelle 28 des Verbrennungsmotors 12 ist über eine schematisch angedeutete Koppeleinrichtung 30 mit einem ersten Antriebszahnrad 32 verbunden. Genauer gesagt ist das erste Antriebszahnrad 32 an einem Wellenabschnitt 34 drehfest festgelegt, der vorzugsweise koaxial zu der Kurbelwelle 28 ausgerichtet ist. Das erste Antriebszahnrad 32 ist ebenfalls als Stirnrad ausgebildet und steht in Eingriff mit dem Eingangszahnrad 26.

Die elektrische Maschine 14 weist einen Stator 40 auf, der mit einem schematisch angedeuteten Gehäuse 41 des Antriebsstranges 10 und/oder mit einer Karosserie des Fahrzeugs verbunden ist. Ferner beinhaltet die elektrische Maschine 14 einen Rotor 42. Der Rotor 42 ist mit einer Rotorwelle 44 verbunden, die als Hohlwelle ausgebildet ist. Die Rotorwelle 44 ist koaxial zu einer der Antriebswellen (im vorliegenden Fall die Antriebswelle 20R) angeordnet, derart, dass die Antriebswelle 20R durch die Rotorwelle 44 hindurchgeführt ist. Die Rotorwelle 44 ist dabei in Bezug auf einen Abschnitt der Antriebswelle 20R mittels nicht näher bezeichneter Lager drehbar gelagert. Die Rotorwelle 44 ist ferner mit einem zweiten Antriebszahnrad 46 verbunden, das ebenfalls als Stirnrad ausgebildet ist und mit dem Eingangszahnrad 26 in Eingriff steht.

Das Eingangszahnrad 26, das erste Antriebszahnrad 32 und das zweite Antriebszahnrad 46 bilden gemeinsam einen Stirnradsatz 48.

Die Getriebeanordnung 16 weist ein erstes Losrad 50 und ein zweites Losrad 52 auf. Die Losräder 50, 52 sind drehbar an der Getriebeeingangswelle 24 gelagert. Ferner beinhaltet die Getriebeanordnung 16 eine erste Kupplung 54 und eine zweite Kupplung 56. Die erste Kupplung 54 ist dazu ausgelegt, das erste Losrad 50 mit der Getriebeeingangswelle 24 zu verbinden oder hiervon zu trennen. In entsprechender Weise ist die zweite Kupplung 56 dazu ausgebildet, das zweite Losrad 52 mit der Getriebeeingangswelle 24 zu verbinden oder davon zu trennen. Die Kupplungen 54, 56 sind jeweils als Lastkupplungen ausgebildet, beispielsweise als nasslaufende Lamellenkupplungen, und sind mittels jeweiliger nicht näher bezeichneter, jedoch durch einen Pfeil angedeuteter Aktuatoren automatisiert betätigbar.

Die Getriebeanordnung 16 beinhaltet ferner ein erstes Triebrad 58, das mit dem ersten Losrad 50 in Eingriff steht, und ein zweites Triebrad 60, das mit dem zweiten Losrad 52 in Eingriff steht. Die Triebräder 58, 60 sind jeweils drehfest mit einem Eingangsglied (beispielsweise ein Differentialkorb) 62 des Differentials 18 drehfest verbunden und koaxial zu den Antriebswellen 20L, 20R angeordnet.

Das erste Losrad 50 und das erste Triebrad 58 bilden einen ersten Radsatz einer ersten Gangstufe G1. Das zweite Losrad 52 und das zweite Triebrad 60 bilden einen zweiten Radsatz einer zweiten Gangstufe G2.

Die Koppeleinrichtung 30 kann als Kupplung ausgebildet sein, ist jedoch vorzugsweise als Freilauf ausgebildet, insbesondere als schaltbarer Freilauf.

Der Antriebsstrang 10 ist als Range-Extender-Antriebsstrang ausgebildet. Im normalen Fahrbetrieb wird das hiermit ausgestattete Fahrzeug rein elektromotorisch mittels der elektrischen Maschine 14 angetrieben, und zwar entweder über die erste Gangstufe G1 oder über die zweite Gangstufe G2. Hierbei ist die Koppeleinrichtung 30 geöffnet, so dass der Verbrennungsmotor 12 in dieser Betriebsart nicht mitgeschleppt werden muss. Gangwechsel können dabei durch überschneidende Betätigung der Kupplungen 54, 56 zugkraftunterbrechungsfrei durchgeführt werden (ähnlich wie bei Doppelkupplungsgetrieben).

Ferner ist der Antriebsstrang dazu ausgelegt, einen rein verbrennungsmotorischen Antrieb einzurichten. Hierbei wird verbrennungsmotorische Antriebsleistung entweder über die erste Gangstufe G1 oder die zweite Gangstufe G2 auf das Differential 18 geleitet. In dieser Betriebsart wird der Rotor 42 der elektrischen Maschine 14 generell mitgeschleppt. Sofern ein mit der elektrischen Maschine 14 verbundener (und nicht näher dargestellter) elektrischer Energiespeicher aufzuladen ist, kann in dieser Betriebsart Antriebsleistung des Verbrennungsmotors in die elektrische Maschine 14 abgezweigt werden, die dann als Generator arbeitet und den elektrischen Energiespeicher auflädt.

Alternativ oder zusätzlich hierzu ist es auch möglich, den Verbrennungsmotor 12 mit einer weiteren elektrischen Maschine zu verbinden, die als Generator 66 ausgebildet ist.

Sofern der elektrische Energiespeicher aufgeladen ist, kann die elektrische Maschine 14 im Leerlauf betrieben werden, so dass sie nur ein relativ geringes Schleppmoment darstellt. Ferner kann die elektrische Maschine 14 im verbrennungsmotorischen Betrieb auch zum Boosten eingesetzt werden, um also elektrische Antriebsleistung zusätzlich zu der verbrennungsmotorischen Antriebsleistung zur Verfügung zu stellen.

Sofern die zwei Kupplungen 54, 56 beide geöffnet sind, kann die elektrische Maschine 14 den Verbrennungsmotor starten. Dies kann im Stand erfolgen oder während eines Rollens (Segelns) des Fahrzeugs. Ferner kann der Verbrennungsmotor 12 bei geöffneten Kupplungen 54, 56 einen elektrischen Energiespeicher über die elektrische Maschine 14 auch im Stand aufladen.

Folgende Abwandlungen der obigen Ausführungsform sind beispielhaft möglich.

Vorliegend sind der Verbrennungsmotor 12 und die elektrische Maschine 14 jeweils von der gleichen axialen Seite aus gesehen an den Stirnradsatz 48 angebunden. Es ist jedoch auch möglich, dass der Verbrennungsmotor 12 und die elektrische Maschine 14 von unterschiedlichen axialen Seiten an den Stirnradsatz 48 angebunden werden.

Die Kupplungen 54, 56 können auch als einfache Klauenkupplungen oder als Synchron-Schaltkupplungen ausgeführt werden.

## Patentansprüche

1. Hybrid-Antriebsstrang (10) für ein Kraftfahrzeug, mit
- einem Verbrennungsmotor (12);
- einer elektrischen Maschine (14);
- einer Getriebeanordnung (16) zur Einrichtung von wenigstens zwei unterschiedlichen Gangstufen (G1, G2), wobei der Verbrennungsmotor (12) und die elektrische Maschine (14) mit einem Eingangsglied (26) der Getriebeanordnung (16) gekoppelt sind; und
- einem Differential (18), das mit einem Ausgang der Getriebeanordnung (16) gekoppelt und dazu eingerichtet ist, Antriebsleistung auf zwei Antriebswellen (20L, 20R) zu verteilen,
wobei die elektrische Maschine (14) und der Verbrennungsmotor (12) über einen Stirnradsatz (48) mit einer Getriebeeingangswelle (24) der Getriebeanordnung (16) gekoppelt sind, wobei der Stirnradsatz (48) ein fest mit der Getriebeeingangswelle (24) verbundenes erstes Zahnrad (26) aufweist, das mit einem der elektrischen Maschine (14) zugeordneten zweiten Zahnrad (46) und mit einem dem Verbrennungsmotor (12) zugeordneten dritten Zahnrad (32) in Eingriff steht,
**dadurch gekennzeichnet, dass**
dassdie elektrische Maschine (14) koaxial zu einer (20R) der Antriebswellen (20L, 20R) angeordnet ist.

2. Hybrid-Antriebsstrang nach Anspruch 1, **dadurch gekennzeichnet, dass** eine Kurbelwelle (28) des Verbrennungsmotors (12) über eine Koppeleinrichtung (30) mit dem dritten Zahnrad (32) gekoppelt ist.

3. Hybrid-Antriebsstrang nach Anspruch 2, **dadurch gekennzeichnet, dass** die Koppeleinrichtung durch einen Freilauf (30) gebildet ist.

4. Hybrid-Antriebsstrang nach einem der Ansprüche 1 - 3, **dadurch gekennzeichnet, dass** eine Motorwelle (44) der elektrischen Maschine (14) fest mit dem zweiten Zahnrad (46) verbunden ist.

5. Hybrid-Antriebsstrang nach einem der Ansprüche 1 - 4, **dadurch gekennzeichnet, dass** an der Getriebeeingangswelle (24) ein erstes und eine zweites Losrad (50, 52) drehbar gelagert sind, die über jeweilige Kupplungen (54, 56) schaltbar sind.

6. Hybrid-Antriebsstrang nach Anspruch 5, **dadurch gekennzeichnet, dass** die Kupplungen als Lastschaltkupplungen (54, 56) ausgebildet sind.

7. Hybrid-Antriebsstrang nach Anspruch 5 oder 6, **dadurch gekennzeichnet, dass** ein Eingangsglied (62) des Differentials (18) mit einem ersten und einem zweiten Triebrad (58, 61) fest verbunden ist, die mit dem ersten bzw. dem zweiten Losrad (50, 52) in Eingriff stehen.

8. Hybrid-Antriebsstrang nach einem der Ansprüche 1 - 7, **dadurch gekennzeichnet, dass** die Getriebeanordnung (16) genau zwei schaltbare Gangstufen (G1, G2) aufweist.

9. Hybrid-Antriebsstrang nach einem der Ansprüche 1 - 8, **dadurch gekennzeichnet, dass** der Verbrennungsmotor (12) und die elektrische Maschine (14) in axialer Richtung auf der gleichen Seite des Differentials (18) angeordnet sind.

10. Hybrid-Antriebsstrang nach einem der Ansprüche 1 - 9, **dadurch gekennzeichnet, dass** die eine Antriebswelle (20R) durch eine Rotorwelle (44) der elektrischen Maschine hindurch geführt ist.

## Claims

1. Hybrid power train (10) for a motor vehicle, comprising
- an internal combustion engine (12);
- an electrical machine (14);
- a transmission arrangement (16) for setting up at least two different gear stages (G1, G2), wherein the internal combustion engine (12) and the electrical machine (14) are coupled to an input element (26) of the transmission arrangement (16); and
- a differential (18) which is coupled to the output of the transmission arrangement (16) and is designed to distribute drive power to two drive shafts (20L, 20R),
wherein the electrical machine (14) and the internal combustion engine (12) are coupled to a transmission input shaft (24) of the transmission arrangement (16) by means of a spur gear set (48), wherein the spur gear set (48) has a first gearwheel (26) which is fixedly connected to the transmission input shaft (24) and is in engagement with a second gearwheel (46), associated with the electrical machine (14), and with a third gearwheel (32), associated with the internal combustion engine (12),
**characterized in that**
the electrical machine (14) is arranged coaxially in relation to one (20R) of the drive shafts (20L, 20R).

2. Hybrid power train according to Claim 1, **characterized in that** a crankshaft (28) of the internal combustion engine (12) is coupled to the third gearwheel (32) by means of a coupling device (30).

3. Hybrid power train according to Claim 2, **characterized in that** the coupling device is formed by a freewheel (30).

4. Hybrid power train according to one of Claims 1-3, **characterized in that** a motor shaft (44) of the electrical machine (14) is fixedly connected to the second gearwheel (46).

5. Hybrid power train according to one of Claims 1-4, **characterized in that** a first and a second idler gear (50, 52) are rotatably mounted on the transmission input shaft (24) and can be shifted by means of respective clutches (54, 56).

6. Hybrid power train according to Claim 5, **characterized in that** the clutches are designed as power-shift clutches (54, 56).

7. Hybrid power train according to Claim 5 or 6, **characterized in that** an input element (62) of the differential (18) is fixedly connected to a first and a second driving gear (58, 61) which are in engagement with the first and, respectively, the second idler gear (50, 52).

8. Hybrid power train according to one of Claims 1-7, **characterized in that** the transmission arrangement (16) has precisely two shiftable gear stages (G1, G2).

9. Hybrid power train according to one of Claims 1-8, **characterized in that** the internal combustion engine (12) and the electrical machine (14) are arranged on the same side of the differential (18) in the axial direction.

10. Hybrid power train according to one of Claims 1-9, **characterized in that** one drive shaft (20R) is routed through a rotor shaft (44) of the electrical machine.

## Revendications

1. Chaîne cinématique hybride (10) pour un véhicule automobile, comprenant
- un moteur à combustion (12) ;
- une machine électrique (14) ;
- un agencement de transmission (16) pour fournir au moins deux rapports de vitesses différents (G1, G2), le moteur à combustion (12) et la machine électrique (14) étant accouplés à un organe d'entrée (26) de l'agencement de transmission (16) ; et
- un différentiel (18) qui est accouplé à une sortie de l'agencement de transmission (16) et qui est prévu pour répartir la puissance d'entraînement sur deux arbres d'entraînement (20L, 20R),
la machine électrique (14) et le moteur à combustion (12) étant accouplés par le biais d'un jeu de pignons droits (48) à un arbre d'entrée de transmission (24) de l'agencement de transmission (16), le jeu de pignons droits (48) présentant une première roue dentée (26) connectée fixement à l'arbre d'entrée de transmission (24), qui est en prise avec une deuxième roue dentée (46) associée à la machine électrique (14) et avec une troisième roue dentée (32) associée au moteur à combustion (12), **caractérisée en ce que**
la machine électrique (14) est disposée coaxialement par rapport à l'un (20R) des arbres d'entraînement (20L, 20R).

2. Chaîne cinématique hybride selon la revendication 1, **caractérisée en ce qu'**un vilebrequin (28) du moteur à combustion (12) est accouplé à la troisième roue dentée (32) par le biais d'un dispositif d'accouplement (30).

3. Chaîne cinématique hybride selon la revendication 2, **caractérisée en ce que** le dispositif d'accouplement est formé par une roue libre (30).

4. Chaîne cinématique hybride selon l'une quelconque des revendications 1 à 3, **caractérisée en ce qu'**un arbre de moteur (44) de la machine électrique (14) est connecté fixement à la deuxième roue dentée (46).

5. Chaîne cinématique hybride selon l'une quelconque des revendications 1 à 4, **caractérisée en ce qu'**au niveau de l'arbre d'entrée de transmission (24), un premier et un deuxième pignon fou (50, 52) sont supportés à rotation, qui peuvent être commutés par le biais d'embrayages respectifs (54, 56).

6. Chaîne cinématique hybride selon la revendication 5, **caractérisée en ce que** les embrayages sont réalisés sous forme d'embrayages à accouplement sous charge (54, 56).

7. Chaîne cinématique hybride selon la revendication 5 ou 6, **caractérisée en ce qu'**un organe d'entrée (62) du différentiel (18) est connecté fixement à un premier et à un deuxième pignon menant (58, 61) qui sont en prise respectivement avec le premier et le deuxième pignon fou (50, 52).

8. Chaîne cinématique hybride selon l'une quelconque des revendications 1 à 7, **caractérisée en ce que** l'agencement de transmission (16) présente exactement deux rapports de vitesses commutables (G1, G2).

9. Chaîne cinématique hybride selon l'une quelconque des revendications 1 à 8, **caractérisée en ce que** le moteur à combustion (12) et la machine électrique (14) sont disposés dans la direction axiale sur le même côté du différentiel (18).

10. Chaîne cinématique hybride selon l'une quelconque des revendications 1 à 9, **caractérisée en ce qu'**un arbre d'entraînement (20R) passe à travers un arbre de rotor (44) de la machine électrique.
